# FASCICULE DE BREVET EUROPEEN

(11) **EP 3 384 677 B1**
(45) Date de publication et mention de la délivrance du brevet: **24.06.2020**
(21) Numéro de dépôt: 16808967.0
(22) Date de dépôt: 02.12.2016
(51) Int. Cl.: H04N 21/426, H04N 21/438

(54) **PROCÉDÉ DE CHANGEMENT DE SERVICE D'UN DÉCODEUR DE TÉLÉVISION NUMÉRIQUE ÉQUIPÉ D'UNE PLURALITÉ DE TUNERS**
VERFAHREN ZUR ÄNDERUNG DES SERVICES EINES DIGITALFERNSEHDECODIERERS MIT EINER VIELZAHL VON TUNERN
METHOD FOR CHANGING SERVICE OF A DIGITAL TELEVISION DECODER HAVING A PLURALITY OF TUNERS

(30) Priorité: 04.12.2015 FR 1561835
(43) Date de publication de la demande: 10.10.2018
(73) Titulaire: SAGEMCOM BROADBAND SAS, 92500 Rueil-Malmaison (FR)
(72) Inventeur: MASCRE, Rémi, 92500 Rueil Malmaison (FR); BERGER, Jérôme, 92500 Rueil Malmaison (FR)
(74) Mandataire: Camus, Olivier Jean-Claude
(86) Numéro de dépôt international: PCT/EP2016/079539
(87) Numéro de publication internationale: WO 2017/093456

(56) Documents cités:
- EP-A1- 1 487 200
- US-A1- 2005 094 733
- US-A1- 2014 198 254

## Description

### DOMAINE TECHNIQUE DE L'INVENTION

La présente invention a pour objet un procédé de changement de service d'un décodeur de télévision numérique équipé d'une pluralité (c'est à dire au moins deux) tuners, ou syntoniseurs. Par service, on entend classiquement ce que les utilisateurs appellent une chaîne de télévision, par exemple une chaîne diffusant au cours de la journée des programmes successifs les uns aux autres. Néanmoins les services peuvent être des services uniquement audio ou des services de données ou autres.

L'objectif de l'invention est d'améliorer un temps de zapping lorsqu'un utilisateur d'un décodeur de télévision numérique procède à une pluralité de changements de service successifs, la succession des changements de service opérée par l'utilisateur étant rapide, en présentant un écart typiquement inférieur à une seconde. Par temps de zapping, ou temps de changement de service, on désigne la durée qui s'écoule entre l'émission d'une commande de changement de service par un utilisateur d'un décodeur de télévision numérique, par exemple au moyen d'une télécommande appropriée, et l'affichage effectif du service désiré sur l'écran relié au décodeur considéré.

Le domaine de l'invention est, d'une façon générale, celui des décodeurs de télévision numérique. Par simplification, dans la suite du document, le terme "décodeur" désignera un décodeur de télévision numérique. Dans le domaine de la télévision numérique, les décodeurs de télévision numérique sont utilisés, notamment afin d'accéder à un ensemble de chaînes de télévision qui sont transmises chiffrées et qui sont déchiffrées au sein du décodeur.

Les moyens de transmission qui transmettent les émissions de télévision à ces décodeurs sont soit des moyens de transmission aériens classiques, soit des câbles coaxiaux, voire optiques, soit des satellites de réémission qui desservent une région, soit encore le réseau Internet.

L'invention trouve un intérêt pour tous les types de décodeur numérique, qu'il s'agisse de décodeurs recevant un flux de signaux à décoder par satellite, ou bien par la TNT, ou bien encore pour les décodeurs IP qui reçoivent le flux de signaux à décoder via le réseau internet.

D'une façon générale, dans un contexte de télévision numérique équipé d'un tuner, le passage d'un premier service de télévision à un deuxième service de télévision est une opération relativement lente. En effet, le décodeur doit successivement :
- régler le tuner du décodeur de télévision sur le canal véhiculant les signaux relatifs au deuxième service de télévision ;
- parmi ces signaux, repérer des en-têtes de paquets du deuxième service de télévision pour se synchroniser sur le flux de données qui correspondent au deuxième service de télévision ;
- récupérer et analyser des tables de description (tables PAT et PMT) des différents services de télévision véhiculés par le canal sur lequel est réglé le tuner, afin de savoir quels flux correspondent au deuxième service de télévision, un canal transportant effectivement généralement les flux de plusieurs services de télévision multiplexés ;
- filtrer les données entrantes pour isoler les flux correspondant au deuxième service de télévision ;
- attendre, dans les données entrantes filtrées, la réception d'un début d'un paquet de données de type GOP (groupes d'images - Group Of Picture en langue anglaise). En effet, dans un flux vidéo les images sont codées en faisant référence aux images voisines. Il est donc nécessaire d'avoir déjà décodé les images voisines avant de pouvoir décoder certaines images. Les images sont regroupées en GOP indépendants, c'est-à-dire qu'une image d'un GOP peut dépendre d'autres images du même GOP mais ne peut pas dépendre d'images extérieures au GOP. Quand le décodeur commence à recevoir les données d'un service de télévision, il s'agit généralement de données au milieu d'un GOP, qui sont en conséquence non exploitables puisque le décodeur ne dispose pas des données du début du GOP ; il est alors nécessaire d'attendre le début du GOP suivant pour pouvoir commencer à décoder la vidéo du nouveau service de télévision auquel l'utilisateur veut accéder.

La succession de ces cinq opérations a pour conséquence dommageable qu'un délai de l'ordre de trois secondes est observé entre le moment où l'utilisateur appuie sur une touche de la télécommande pour changer de service et le moment où le nouveau service s'affiche à l'écran.

### ARRIERE-PLAN TECHNOLOGIQUE DE L'INVENTION

Dans le cas où le décodeur dispose de plusieurs tuners, il peut recevoir plusieurs services simultanément. On connait alors dans l'état de la technique la possibilité de configurer un premier tuner pour recevoir et afficher (c'est-à-dire restituer sur un écran de télévision) un premier service de télévision, tout en configurant simultanément d'autres tuners ; la configuration de ces autres tuners consiste à réaliser les cinq opérations qui ont été précédemment décrites pour réaliser un changement de service afin de recevoir des services de télévision qui seront éventuellement affichés ultérieurement, sans pour autant qu'ils soient affichés pendant l'affichage du premier service de télévision ; ces autres services de télévision pourront alors être affichés quasiment instantanément (en moins de cent millisecondes) lorsqu'un utilisateur voudra y accéder, le travail de préparation à l'affichage, préalablement décrit, ayant été réalisé pendant la configuration du tuner.

Cette solution pose cependant un problème lorsque l'utilisateur procède à des changements de service - en d'autres termes zappe - plusieurs fois d'affilée très rapidement. En effet, on observera dans un tel cas de figure des temps de changement de service irréguliers, certains temps de service pouvant retrouver une durée significative, de l'ordre de trois secondes.

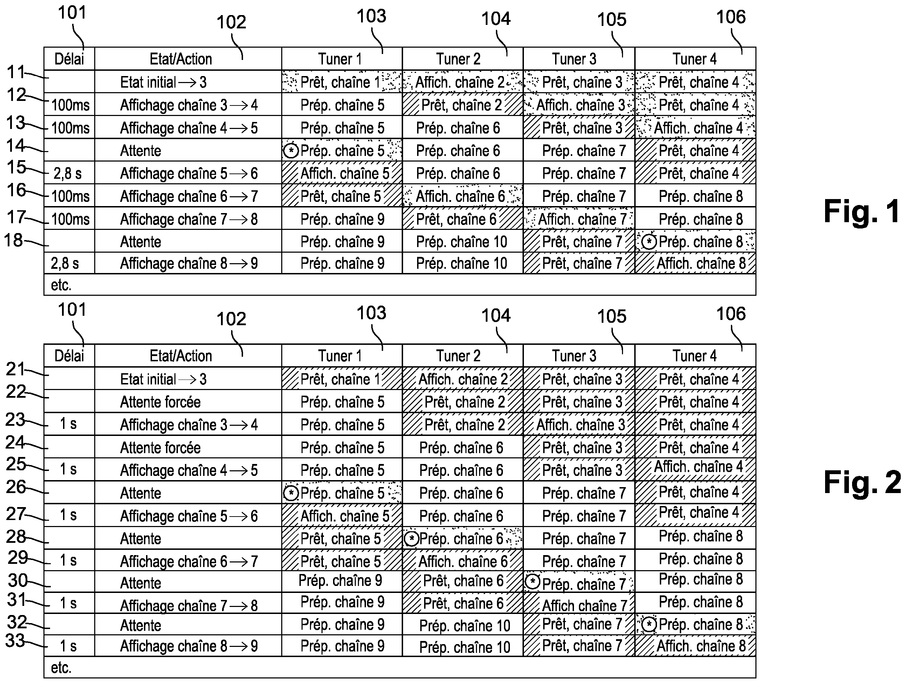

Un tel cas de figure est illustré au moyen de la figure 1, sur laquelle on a représenté un premier tableau illustrant le cas d'un décodeur numérique disposant de quatre tuners, et pour lequel on observe des interventions rapides (de l'ordre de cent millisecondes) d'un utilisateur pour procéder à des changements de service.

Dans le tableau de la figure 1, on a représenté six colonnes :
- une première colonne 101 indique des valeurs de temps écoulé entre différentes actions effectuées par le décodeur ;
- une deuxième colonne 102 indique un état visible du décodeur et une éventuelle action en cours effectuée par le décodeur ;
- une troisième colonne 103 indique l'opération en cours de réalisation avec le premier tuner (Tuner 1) ;
- une quatrième colonne 104 indique l'opération en cours de réalisation avec le deuxième tuner (Tuner 2) ;
- une cinquième colonne 105 indique l'opération en cours de réalisation avec le troisième tuner (Tuner 3) ;
- une sixième colonne 106 indique l'opération en cours de réalisation avec le quatrième tuner (Tuner 4).

Chaque tuner peut adopter plusieurs états : soit être le tuner permettant l'affichage de la chaîne (ou du service) en cours de restitution sur un écran, soit être en cours de préparation d'une autre chaîne, en exécutant les différentes opérations précédemment décrites nécessaires à un changement de service, soit être prêt à afficher à une autre chaîne (les opérations de préparation au changement de service ayant déjà été effectuées). Pour chacun des quatre tuners servant dans l'exemple représenté, le numéro des chaînes concernées est indiqué dans chaque case du tableau.

Les états indiqués dans la colonne 102 correspondent à ce qui est visible par un utilisateur dudit décodeur. Ces états, une fois un état initial passé (correspondant par exemple à l'état du décodeur avant que l'utilisateur ne débute ses opérations de changements de service rapprochées), peuvent être soit un état d'affichage d'une chaîne, soit un état d'attente d'affichage d'une chaîne suivante que l'utilisateur souhaite voir affichée. L'état d'attente se traduit le plus souvent soit par une image affichée figée, soit par un écran noir.

L'action indiquée dans la colonne 102 est une action de changement de chaîne, illustrée par les symboles "->x", où x désigne le numéro de la chaîne que l'utilisateur souhaite afficher.

Le premier tableau illustre ainsi une succession d'états et d'actions des différents tuners, un état visible du décodeur complété par les actions demandées par l'utilisateur. Les différentes lignes du premier tableau correspondent à un déroulement chronologique observé pour la prise en compte des demandes de changement de service souhaitées par l'utilisateur.

Le premier tableau montre ainsi :
- une première ligne 11 correspondant à l'état initial. Cet état initial indique l'état des différents tuners au moment où l'utilisateur débute ses opérations de changement de service rapprochées. De telles opérations n'ayant pas eu lieu depuis un certain temps (supérieur à trois secondes), les tuners 1, 3 et 4 sont prêts à immédiatement afficher une chaîne, le tuner 2 étant affecté à l'affichage d'une chaîne, ici la chaîne 2. Dans l'état initial, l'utilisateur envoie une instruction au décodeur de changement de service pour accéder à la chaîne 3.
- Une deuxième ligne 12 indique que la chaîne 3 est affichée très rapidement - au bout d'environ 100 ms - au moyen du tuner 3 ; le tuner 1, qui était prêt à afficher une autre chaîne (la chaîne 1) débute alors les opérations de préparation au changement de service sur une nouvelle chaîne, la chaîne 5 ; on estime en effet, c'est notamment le cas lorsque l'utilisateur utilise les fonctions "P+", permettant d'accéder à une chaîne suivante, que la chaîne 1 a moins de chance d'être prochainement sélectionnée par l'utilisateur à présent que celui-ci a choisi la chaîne 3. Le tuner 2, qui était utilisé pour l'affichage de la chaîne 2, demeure dans un état où il est prêt à quasi-instantanément afficher de nouveau la chaîne 2 pour le cas où l'utilisateur reviendrait sur sa dernière décision de changement de service. Dans cet état décrit, l'utilisateur envoie une commande de changement de service pour accéder à la chaîne 4.
- Une troisième ligne 13 indique que la chaîne 4 est affichée très rapidement - au bout d'environ 100 ms - au moyen du tuner 4 ; le tuner 2, qui était resté prêt à afficher une autre chaîne (la chaîne 2) débute alors les opérations de préparation au changement de service sur une nouvelle chaîne, la chaîne 6 ; là encore, on estime en effet que la chaîne 2 a moins de chance d'être prochainement sélectionnée par l'utilisateur à présent que celui-ci a choisi la chaîne 4. Le tuner 3, qui était utilisé pour l'affichage de la chaîne 3, demeure dans un état où il est prêt à quasi-instantanément afficher de nouveau la chaîne 3 pour le cas où l'utilisateur reviendrait sur sa dernière décision de changement de service. Dans cet état décrit, l'utilisateur envoie une commande de changement de service pour accéder à la chaîne 5.
- Une quatrième ligne 14 indique un état d'attente du décodeur ; en effet, l'utilisateur a manifesté sa volonté d'afficher la chaîne 5, mais le tuner 1 n'a débuté les opérations de préparation de changement de service de la chaîne 5 qu'à la ligne 102, soit environ seulement 200 ms avant de recevoir l'instruction de passer sur cette chaîne 5. Les opérations de préparation au changement de service n'ont ainsi pas pu s'achever, et le tuner 1 a encore besoin d'environ 2,8 secondes pour pouvoir afficher la chaîne 5, comme visible à la ligne 106. Dans le premier tableau, un astérisque indique les opérations effectuées par un des tuners bloquant l'affichage d'une chaîne à afficher. Dans le même temps, le tuner 2 finalise les opérations de changement de service pour accéder à la chaîne 6, et le tuner 3 peut réaliser les opérations nécessaires au changement de service pour accéder à la chaîne 7 dans leur plus grande partie (puisqu'il dispose de 2,8 secondes).

Les opérations des lignes 11, 12, 13 et 14 se répètent ensuite au niveau de lignes 15, 16, 17 et 18, selon le même mécanisme, pour accéder à des chaînes suivantes. Le processus peut ainsi être répété indéfiniment.

Dans l'exemple illustré, on constate donc que si on profite bien de la présence de quatre tuners pour améliorer le temps de changement de service pour les deux premières opérations de service, dès la troisième opération de zapping, le temps de changement de service est de nouveau trop important, comparable au temps de changement de service pour un décodeur équipé d'une unique tuner.

Le document US 2014/198254 intitulé « Preemptive preloading of télévision program data » est connu de l'état de la technique.

### DESCRIPTION GENERALE DE L'INVENTION

Le procédé selon l'invention propose une solution au problème qui vient d'être exposé. Dans l'invention, on propose une solution pour tirer avantage de la présence de plusieurs tuners au sein d'un décodeur de télévision numérique afin de proposer un temps de changement de service optimisé. Le temps de changement de service selon l'invention est optimisé dans la mesure où il n'est plus jamais nécessaire, même au bout d'un nombre important d'opérations de changement de service consécutives et rapprochées, d'attendre une durée relativement importante (de l'ordre de trois secondes) pour voir se réaliser le changement de service désiré. A cet effet, on propose dans l'invention, d'imposer parfois des temps d'attente avant l'affichage de certains services, quand bien même lesdits services auraient été prêts à être affichés ; les temps d'attente forcée permettent aux différents tuners de préparer les opérations de changement de service pour des chaînes qui pourront alors être affichées ultérieurement sans trop d'attente. Ces temps d'attente forcée ne sont pas d'une durée importante - ils sont de l'ordre de la seconde - ce qui assure par ailleurs une certaine homogénéité dans les temps de changement de service observés.

A cet effet, on propose l'invention telle que définie dans les revendications 1-10.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, un premier tableau illustrant l'utilisation de quatre tuners dans un décodeur de télévision numérique pour assurer des changements de service selon un procédé connu de l'état de la technique.
- à la figure 2, un deuxième tableau illustrant un premier exemple de mise en œuvre du procédé selon l'invention ;
- à la figure 3, un troisième tableau illustrant un deuxième exemple de mise en œuvre du procédé selon l'invention.

### DESCRIPTION DES FORMES DE REALISATION PREFEREES DE L'INVENTION

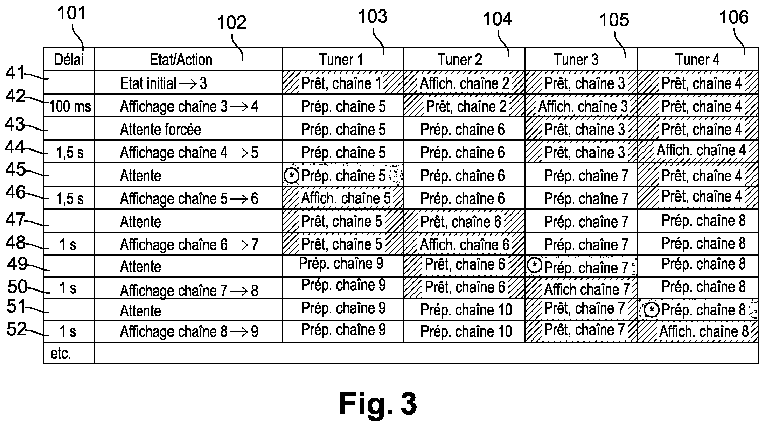

Les différents éléments apparaissant sur plusieurs figures auront gardé, sauf précision contraire, la même référence. Notamment, la figure 2 et la figure 3 représentent respectivement un deuxième tableau 200 et un troisième tableau 300 reprenant les mêmes colonnes que les colonnes du tableau 1.

Les différents exemples considèrent le cas où le décodeur est équipé de quatre tuners, mais dans d'autres exemples, le décodeur est équipé d'un nombre différent de décodeurs, au minimum 2 ; le procédé selon l'invention trouve un intérêt tout particulier avec un nombre de tuners équipant le décodeur au moins égal à trois.

Sur la figure 2, on a représenté un premier exemple de mise en œuvre du procédé selon l'invention, illustré sous la forme d'un deuxième tableau organisé selon le même principe que le premier tableau décrit à la figure 1.

Le deuxième tableau illustre ainsi une succession d'états et d'actions des différents tuners, et un état apparent du décodeur complété par les actions demandées par l'utilisateur dans un exemple de mise en œuvre du procédé selon l'invention. Les différentes lignes du deuxième tableau correspondent à un déroulement chronologique observé pour la prise en compte des demandes de changement de service souhaitées par l'utilisateur selon cet exemple de mise en œuvre du procédé selon l'invention.

Le deuxième tableau montre ainsi :
- une première ligne 21 correspondant à l'état initial. Cet état initial indique l'état des différents tuners au moment où l'utilisateur débute ses opérations de changement de service rapprochées. Comme dans le cas du premier tableau décrit, de telles opérations n'ayant pas eu lieu depuis un certain temps (supérieur à trois secondes), les tuners 1, 3 et 4 sont prêts à immédiatement afficher une chaîne, le tuner 2 étant affecté à l'affichage d'une chaîne, ici la chaîne 2. Dans l'état initial, l'utilisateur envoie une instruction au décodeur de changement de service pour accéder à la chaîne 3.
- Dans cet exemple de mise en œuvre du procédé selon l'invention, on impose alors, dans une étape suivante (ligne 22), une attente forcée, d'une seconde dans l'exemple considéré. Cette attente forcée est un délai qui est imposé au décodeur avant qu'il n'affiche la chaîne 3 ; l'attente est dite forcée dans la mesure où la chaîne 3 pourrait être quasiment instantanément affichée puisque les informations nécessaires à son affichage ont été préparées au moyen du tuner 3. L'attente forcée permet aux tuners qui ont débuté un travail de préparation d'un changement de service pour une tierce chaîne, ici la chaîne 5 au moyen du tuner 1, qui était prêt à afficher une autre chaîne (la chaîne 1), de progresser dans la préparation des opérations de changement de service de la chaîne 5. Le tuner 2, qui était utilisé pour l'affichage de la chaîne 2, demeure dans un état où il est prêt à quasi-instantanément afficher de nouveau la chaîne 2 pour le cas où l'utilisateur reviendrait sur sa dernière décision de changement de service. On estime en effet, c'est notamment le cas lorsque l'utilisateur utilise les fonctions "P+", permettant d'accéder à une chaîne suivante, que la chaîne 1 a moins de chance d'être prochainement sélectionnée par l'utilisateur à présent que celui-ci a choisi la chaîne 3.
- Une troisième ligne 23 indique que la chaîne 3 est affichée, après le temps d'attente forcée de l'étape précédente au moyen du tuner 3; le tuner 1, poursuit alors les opérations de préparation au changement de service sur la chaîne 5. Dans cet état décrit, l'utilisateur envoie une commande de changement de service pour accéder à la chaîne 4.
- Une quatrième ligne 24 indique qu'on procède à une nouvelle attente forcée d'environ une seconde. Cette attente forcée est un nouveau délai qui est imposé au décodeur avant qu'il n'affiche la chaîne 4. L'attente forcée permet aux différents tuners, ici les tuners 1 et 2, de poursuivre ou de débuter le travail de préparation d'un changement de service pour une tierce chaîne, ici la chaîne 5 au moyen du tuner 1, et la chaîne 6 au moyen du tuner 2. Le tuner 3, qui était utilisé pour l'affichage de la chaîne 3, demeure dans un état où il est prêt à quasi-instantanément afficher de nouveau la chaîne 3 pour le cas où l'utilisateur reviendrait sur sa dernière décision de changement de service.
- Une cinquième ligne 25 indique que la chaîne 4 est alors affichée, après le temps d'attente forcée de l'étape précédente, au moyen du tuner 4; le tuner 1, respectivement le tuner 2, poursuit alors les opérations de préparation au changement de service sur la chaîne 5, respectivement sur la chaîne 6. Dans cet état décrit, l'utilisateur envoie une commande de changement de service pour accéder à la chaîne 5
- Une sixième ligne 26, le décodeur doit de fait observer une attente, car le tuner 5 n'a pas totalement achevé les opérations de préparation de changement de service pour afficher la chaîne 5. Cependant, ces opérations de préparation ont déjà bien progressé depuis l'étape 22, et le temps nécessaire pour les finaliser est de l'ordre de une seconde, soit bien inférieur au 2,8 secondes qui pouvaient être observées dans l'exemple décrit de l'état de la technique. Dans le même temps, le tuner 3 débute la préparation de la chaîne 7, le tuner 2 poursuit celle de la chaîne 6, et le tuner 4 maintient disponible la configuration achevée pour la chaîne 4, pour les mêmes raisons que celles invoquées précédemment lorsque les informations nécessaires pour l'affichage des chaînes 2 et 3 étaient conservées.

Ainsi, dans l'invention, en proposant l'utilisation de périodes d'attente forcées, on harmonise les temps d'attente observés pour tous les changements de service à venir ; on observe en effet, pour les lignes 27 à 33, que le temps d'attente est de fait de l'ordre d'une seconde, qui est désormais suffisant pour que les opérations nécessaires aux changements de service soient achevées pour chaque tuner.

Avantageusement, dans un autre mode de mise en œuvre décrit au moyen de la figure 3, le décodeur peut omettre le délai supplémentaire pour le premier changement de chaîne. En effet, il est très fréquent que l'utilisateur ne procède qu'à une unique opération de changement de service, par exemple en appuyant qu'une fois sur la touche "P+" de sa télécommande afin de passer à la chaîne suivante ; souvent, l'utilisateur attend un certain temps avant d'appuyer à nouveau sur la touche "P+". Dans ce cas, il est avantageux d'effectuer le changement de service immédiatement après la réception par le décodeur de la première commande de changement de service : en effet, les tuners non utilisés pour l'affichage de la chaîne sélectionnée ont alors le temps de se préparer pendant le délai entre les éventuelles pressions successives de touches commandant des changements de service. En revanche si l'utilisateur enchaîne rapidement les appuis-touche commandant des changements de service, et que le décodeur a exécuté le premier changement de service sans marquer d'attente forcée, immédiatement, il est alors avantageux d'augmenter le délai d'attente forcée pour les changements de service suivants.

Un tel exemple de mise en œuvre du procédé selon l'invention est illustré au moyen du troisième tableau montré à la figure 3, qui est organisé selon le même principe que les tableaux des figures 1 et 2.

Le troisième tableau illustre ainsi une succession d'états et d'actions des différents tuners, et un état apparent du décodeur complété par les actions demandées par l'utilisateur dans un exemple de mise en œuvre du procédé selon l'invention. Les différentes lignes du deuxième tableau correspondent à un déroulement chronologique observé pour la prise en compte des demandes de changement de service souhaitées par l'utilisateur selon cet exemple de mise en œuvre du procédé selon l'invention.

Le troisième tableau montre ainsi :
- une première ligne 41 correspondant à l'état initial. Cet état initial indique l'état des différents tuners au moment où l'utilisateur débute ses opérations de changement de service rapprochées. Comme dans le cas du premier tableau et du deuxième tableau décrits, de telles opérations n'ayant pas eu lieu depuis un certain temps (supérieur à trois secondes), les tuners 1, 3 et 4 sont prêts à immédiatement afficher une chaîne, le tuner 2 étant affecté à l'affichage d'une chaîne, ici la chaîne 2. Dans l'état initial, l'utilisateur envoie une instruction au décodeur de changement de service pour accéder à la chaîne 3.
- Une deuxième ligne 42 indique que la chaîne 3 est affichée très rapidement - au bout d'environ 100 ms - au moyen du tuner 3 ; le tuner 1, qui était prêt à afficher une autre chaîne (la chaîne 1) débute alors les opérations de préparation au changement de service sur une nouvelle chaîne, la chaîne 5, pour les raisons expliquées notamment lors de la description du tableau 1. Le tuner 2, qui était utilisé pour l'affichage de la chaîne 2, demeure dans un état où il est prêt à quasi-instantanément afficher de nouveau la chaîne 2, comme c'était le cas dans le premier tableau décrit.
- Dans cet exemple de mise en œuvre du procédé selon l'invention, on impose alors, dans une étape suivante (ligne 43), une attente forcée, d'environ 1,5 seconde dans l'exemple considéré. Cette attente forcée est un délai qui est imposé au décodeur avant qu'il n'affiche la chaîne 4 ; l'attente est dite forcée dans la mesure où la chaîne 4 pourrait être quasiment instantanément affichée puisque les informations nécessaires à son affichage ont été préparées au moyen du tuner 4. L'attente forcée permet aux tuners qui ont débuté un travail de préparation d'un changement de service pour une tierce chaîne de progresser dans la préparation des opérations de changement de service des chaînes qui leur sont affectées.
- Une quatrième ligne 44 indique que la chaîne 4 est affichée, après le temps d'attente forcée de l'étape précédente au moyen du tuner 3; le tuner 1, poursuit alors les opérations de préparation au changement de service sur la chaîne 5, et le tuner 2 celui de la chaîne 6. Dans cet état décrit, l'utilisateur envoie une commande de changement de service pour accéder à la chaîne 5.
- Une cinquième ligne 45 indique qu'il est nécessaire de marquer un temps d'attente pour que le tuner 1 finisse de préparer la chaîne 5. Le temps d'attente nécessaire est alors de l'ordre de 1,5 seconde, la préparation de la chaîne 5 ayant débuté dès la deuxième ligne 42, et il n'est ainsi pas nécessaire de marquer une attente forcée.
- Une sixième ligne 46 indique que la chaîne 5 est alors affichée, après le temps d'attente non forcée de l'étape précédente, au moyen du tuner 1; le tuner 2, respectivement le tuner 3, poursuit alors les opérations de préparation au changement de service sur la chaîne 6, respectivement sur la chaîne 7. Dans cet état décrit, l'utilisateur envoie une commande de changement de service pour accéder à la chaîne 6.
- Dans cet exemple de mise en œuvre du procédé selon l'invention, on impose alors, dans une étape suivante (ligne 47), une nouvelle attente forcée, d'environ 1 seconde. Cette attente forcée est un délai qui est imposé au décodeur avant qu'il n'affiche la chaîne 6 ; l'attente est dite forcée dans la mesure où la chaîne 6 pourrait être quasiment instantanément affichée puisque les informations nécessaires à son affichage ont été préparées au moyen du tuner 2. L'attente forcée permet aux tuners qui ont débuté un travail de préparation d'un changement de service pour une tierce chaîne de progresser dans la préparation des opérations de changement de service des chaînes qui leur sont affectées.
- Le processus de changement de service peut alors adopter un rythme régulier, comparable à celui du deuxième tableau, avec des temps de changement de service de l'ordre de 1 seconde dans les lignes 48 à 52.

Ainsi, dans l'invention, en proposant l'utilisation de périodes d'attente forcées, mais tout en privilégiant la rapidité d'un premier changement de service, on harmonise les temps d'attente observés pour tous les changements de service à venir.

Avantageusement, dans l'invention, on prévoit que les retards forcés appliqués soient sensiblement égaux à une valeur égale à T/(N-1), où T désigne une durée habituelle de changement de service (typiquement 3 ms), et où N désigne le nombre de tuners de la pluralité de tuners présents sur le décodeur, et ceci lorsqu'on ne privilégie pas le premier changement de service.

Lorsque le premier changement de service est privilégié, c'est-à-dire lorsqu'on le réalise quasiment instantanément lors de la réception de la commande de changement de service, le retard forcé est avantageusement sensiblement égal à une valeur égale à T/(N-2).

Dans les différents exemples décrits, les chaînes ont été désignées par des chiffres se succédant. Dans la pratique, les différentes chaînes préparées par les différents tuners en vue d'un éventuel affichage peuvent être par exemple sélectionnées dans une liste de chaînes favorites de l'utilisateur, ou bien correspondre à des chaînes qui vont se succéder par des appuis successifs et rapprochés sur une touche de la télécommande du décodeur, notamment la touche "P+" ou la touche "P-", qui permettent d'avancer, respectivement de reculer, dans une liste de chaînes selon un ordre établi par un opérateur de télévision, ou également à des chaînes en accès direct accessibles par une touche dédiée de la télécommande, ou encore à des chaînes « historiques » que l'utilisateur à visionnées récemment accessibles par une touche « retour » de la télécommande.

## Revendications

1. Procédé de changement de service au sein d'un décodeur de télévision numérique, ledit décodeur numérique comportant une pluralité de tuners, chaque tuner de la pluralité de tuners étant adapté pour recevoir un flux de signaux comportant des données relatives à des services de télévision, chaque tuner de la pluralité de tuners étant utilisé en vue d'une opération de changement de service, ledit procédé étant **caractérisé en ce qu'**il comporte les différentes étapes consistant à :
- Configurer chaque tuner de la pluralité de tuner pour la réception d'un service particulier ;
- Restituer, sur un écran, un premier service correspondant au service pour la réception duquel a été configuré un premier tuner de la pluralité de tuners ;
- Recevoir, par le décodeur, une première commande de changement de service en vue d'afficher un deuxième service pour la réception duquel a été configuré un deuxième tuner de la pluralité de tuners ;
- Recevoir, par le décodeur, une deuxième commande de changement de service en vue d'afficher un troisième service pour la réception duquel a été configuré un troisième tuner de la pluralité de tuners ;
- Appliquer un temps d'attente forcé avant l'affichage du deuxième service et/ou du troisième service si le deuxième service et/ou le troisième service peuvent être quasiment instantanément affichés, le temps d'attente forcé étant sensiblement égal à une valeur égale à T/K, où T désigne une durée habituelle de changement de service, et où K désigne un nombre entier inférieur ou égal à un nombre N de tuners de la pluralité de tuners.

2. Procédé selon la revendication précédente **caractérisé en ce que** le temps d'attente forcé est appliqué pour l'affichage du deuxième service.

3. Procédé selon l'une quelconque des revendications précédentes **caractérisé en ce que** K adopte une des valeurs suivantes : N-1, N-2, N/2+1, N/2

4. Procédé selon la revendication 1 ou 3 **caractérisé en ce que** le temps d'attente forcé est appliqué pour l'affichage du troisième service, sans être appliqué pour l'affichage du deuxième service.

5. Procédé selon la revendication précédente **caractérisé en ce que** le temps d'attente forcé est sensiblement égal à une valeur T/(N-2), où T désigne une durée habituelle de changement de service, et où N désigne le nombre de tuners de la pluralité de tuners.

6. Procédé selon l'une quelconque des revendications précédentes, **caractérisé en ce que** le temps d'attente forcé est compris entre 0,5 seconde et 1,5 seconde.

7. Procédé selon l'une quelconque des revendications précédentes **caractérisé en ce qu'**il comporte l'étape supplémentaire consistant à, après l'affichage du deuxième service et au moins jusqu'à la réception de la deuxième commande de changement de service, maintenir le premier tuner configuré pour la réception du premier service.

8. Produit programme d'ordinateur comprenant des instructions qui, lorsque le programme est exécuté par ordinateur, conduisent celui-ci à mettre en œuvre les étapes du procédé selon l'une quelconque des revendications précédentes.

9. Support d'enregistrement lisible par un ordinateur, sur lequel est enregistré le produit programme d'ordinateur selon la revendication 8.

10. Dispositif électronique de type décodeur de télévision numérique **caractérisé en ce qu'**il est adapté pour mettre en œuvre le procédé selon l'une quelconque des revendications 1 à 7.

## Patentansprüche

1. Änderungsverfahren eines Dienstes innerhalb eines digitalen Fernsehdecodierers, wobei der genannte digitale Decodierer eine Vielzahl von Tunern umfasst, wobei jeder Tuner der Vielzahl von Tunern geeignet ist, um einen Signalstrom zu empfangen, umfassend Daten bezüglich Fernsehdiensten, wobei jeder Tuner der Vielzahl von Tunern zum Zweck einer Änderungsoperation eines Dienstes verwendet wird, wobei das genannte Verfahren **dadurch gekennzeichnet ist, dass** es die unterschiedlichen Schritte umfasst, bestehend aus:
- Konfigurieren jedes Tuners der Vielzahl von Tunern für den Empfang eines bestimmten Dienstes;
- Wiedergeben eines ersten Dienstes, der dem Dienst für den Empfang entspricht, von dem ein erster Tuner aus der Vielzahl von Tunern konfiguriert wurde, auf einem Bildschirm;
- Empfangen eines ersten Änderungsbefehls eines Dienstes durch den Decodierer zum Anzeigen eines zweiten Dienstes für den Empfang, von dem ein zweiter Tuner der Vielzahl von Tunern konfiguriert wurde;
- Empfangen eines zweiten Änderungsbefehls eines Dienstes durch den Decodierer zum Anzeigen eines dritten Dienstes für den Empfang, von dem ein dritter Tuner der Vielzahl von Tunern konfiguriert wurde;
- Anwenden einer erzwungenen Wartezeit vor dem Anzeigen des zweiten Dienstes und / oder des dritten Dienstes, wenn der zweite Dienst und / oder der dritte Dienst beinahe unverzüglich angezeigt sein können, wobei die erzwungene Wartezeit deutlich gleich einem Wert gleich T/K ist, wobei T eine übliche Änderungsdauer eines Dienstes bezeichnet und wobei K eine ganze Zahl kleiner als oder gleich einer Anzahl N von Tunern der Vielzahl von Tunern ist.

2. Verfahren gemäß dem voranstehenden Anspruch, **dadurch gekennzeichnet, dass** die erzwungene Wartezeit für die Anzeige des zweiten Dienstes angewendet wird.

3. Verfahren gemäß irgendeinem der voranstehenden Ansprüche, **dadurch gekennzeichnet, dass** K einen der folgenden Werte annimmt: N-1, N-2, N/2+1, N/2.

4. Verfahren gemäß Anspruch 1 oder 3, **dadurch gekennzeichnet, dass** die erzwungene Wartezeit für die Anzeige des dritten Dienstes angewendet ist, ohne für die Anzeige des zweiten Dienstes angewendet zu werden.

5. Verfahren gemäß dem voranstehenden Anspruch, **dadurch gekennzeichnet, dass** die erzwungene Wartezeit deutlich gleich einem Wert T/(N-2) ist, wobei T eine übliche Änderungsdauer eines Dienstes bezeichnet, und wobei N die Anzahl von Tunern der Vielzahl von Tunern bezeichnet.

6. Verfahren gemäß irgendeinem der voranstehenden Ansprüche, **dadurch gekennzeichnet, dass** die erzwungene Wartezeit zwischen 0,5 Sekunden und 1,5 Sekunden inbegriffen ist.

7. Verfahren gemäß irgendeinem der voranstehenden Ansprüche, **dadurch gekennzeichnet, dass** es den zusätzlichen Schritt umfasst, bestehend im Halten des ersten Tuners, der für den Empfang des ersten Dienstes konfiguriert ist, nach der Anzeige des zweiten Dienstes und wenigstens bis zum Empfang des zweiten Änderungsbefehls eines Dienstes.

8. Computerprogramm-Produkt, umfassend Anweisungen die, wenn das Programm per Computer ausgeführt ist, dieses dazu veranlassen, die Schritte des Verfahrens gemäß irgendeinem der voranstehenden Ansprüche umzusetzen.

9. Von einem Computer lesbarer Speicherträger, auf dem das Computerprogramm gemäß Anspruch 8 gespeichert ist.

10. Elektronische Vorrichtung vom Typ digitaler Fernsehdecodierer, **dadurch gekennzeichnet, dass** sie geeignet ist, um das Verfahren gemäß irgendeinem der Ansprüche 1 bis 7 umzusetzen.

## Claims

1. Method for changing service within a digital television decoder, said digital decoder comprising a plurality of tuners, each tuner of the plurality of tuners being capable of receiving a stream of signals comprising data relating to television services, each tuner of the plurality of tuners being used for a change of service operation, said method being **characterised in that** it comprises the various steps consisting of:
- Configuring each tuner of the plurality of tuners for receiving a particular service;
- Restoring, on a screen, a first service corresponding to the service for the reception of which a first tuner of the plurality of tuners has been configured;
- Receiving, via the decoder, a first change of service command in order to display a second service for the reception of which a second tuner of the plurality of tuners has been configured;
- Receiving, via the decoder, a second change of service command in order to display a third service for the reception of which a third tuner of the plurality of tuners has been configured;
- Applying a forced waiting time before displaying the second service and/or the third service if the second service and/or the third service can be practically instantaneously displayed, the forced waiting time being substantially equal to a value equal to T/K, where T designates a usual duration of a change of service, and where K designates an integer less than or equal to a number N of tuners of the plurality of tuners.

2. Method according to the preceding claim **characterised in that** the forced waiting time is applied for the display of the second service.

3. Method according to any preceding claim **characterised in that** K adopts one of the following values: N-1, N-2, N/2+1, N/2

4. Method according to claim 1 or 3 **characterised in that** the forced waiting time is applied for the display of the third service, without being applied for the display of the second service.

5. Method according to the preceding claim **characterised in that** the forced waiting time is substantially equal to a value T/(N-2), where T designates a usual duration of a change of service, and where N designates the number of tuners of the plurality of tuners.

6. Method according to any preceding claim, **characterised in that** the forced waiting time is comprised between 0.5 seconds and 1.5 seconds.

7. Method according to any preceding claim **characterised in that** it comprises the additional step consisting of, after the display of the second service and at least until the receiving of the second change of service command, maintaining the first tuner configured for the receiving of the first service.

8. Computer program product comprising instructions that, when the program is executed by computer, lead the latter to implement the steps of the method according to any preceding claim.

9. Recording support that can be read by a computer, whereon is recorded a computer program product according to claim 8.

10. Electronic device of the digital television decoder type **characterised in that** it is suitable for implementing the method according to any of claims 1 to 7.
